(19) Europäisches Patentamt
European Patent Office
Office européen des brevets

(11) Veröffentlichungsnummer: **0 496 241 A1**

# (12) EUROPÄISCHE PATENTANMELDUNG

(21) Anmeldenummer: **92100418.0**

(22) Anmeldetag: **13.01.92**

(51) Int. Cl.5: **C08K 13/02**, C08L 77/00, //(C08K13/02,5:5313,3:22), (C08K13/02,5:5313,3:38)

(30) Priorität: **25.01.91 DE 4102104**

(43) Veröffentlichungstag der Anmeldung: **29.07.92 Patentblatt 92/31**

(84) Benannte Vertragsstaaten: **DE FR GB IT**

(71) Anmelder: **BAYER AG**

**W-5090 Leverkusen 1 Bayerwerk(DE)**

(72) Erfinder: **Ostlinning, Edgar, Dr.**
**Rembrandstrasse 37**
**W-4000 Düsseldorf 1(DE)**
Erfinder: **El Sayed, Aziz, Dr.**
**Saarlautenerstrasse 39**
**W-5090 Leverkusen 1(DE)**
Erfinder: **Sommer, Klaus, Dr.**
**Morgengraben 3**
**W-5000 Köln 80(DE)**
Erfinder: **Fröhlen, Hans Günter**
**In Holzhausen 92**
**W-5090 Leverkusen 3(DE)**

## (54) Flammgeschützte, nicht tropfende Polyamidformmassen.

(57) Gegenstand der Erfindung sind flammgeschützte, nicht tropfende Polyamidformmassen, die in bestimmten Mengen

a) Phosphinsäureester von Polyphenolen, die noch freie, phenolische OH-Gruppen besitzen,
b) Zinkborat und/oder Zinkoxid,
c) Thermoplaste mit überwiegend aromatischer Hauptkette, gegebenenfalls
d) Antidripping-Mittel (z.B. Polyfluorethylenpolymerisate)

und gegebenenfalls Verstärkungsmittel und/oder mineralische Füllstoffe sowie weitere Additive für die Verarbeitung, Stabilisierung etc. enthalten.

EP 0 496 241 A1

Gegenstand der Erfindung sind flammgeschützte, nicht tropfende Polyamidformmassen, die in bestimmten Mengen

a) Phosphinsäureester von Polyphenolen, die noch freie, phenolische OH-Gruppen besitzen,

b) Zinkborat und/oder Zinkoxid,

c) Thermoplaste mit überwiegend aromatischer Hauptkette, gegebenenfalls

d) Antidripping-Mittel (z.B. Polyfluorethylenpolymerisate) und gegebenenfalls

Verstärkungsmittel und/oder mineralische Füllstoffe sowie weitere Additive für die Verarbeitung, Stabilisierung etc. enthalten.

Ester von Phosphinsäuren und Alkoholen bzw. Phenolen sind bekannt. Auch wurden sie bereits als Flammschutzmittel vorgeschlagen. In der DE-OS 3 219 047 werden Phosphinsäureester von zweiwertigen Alkoholen oder ein- oder mehrwertigen Phenolen als Flammschutzmittel für Formmassen aus Polyphenylenoxid und schlagzäh modifiziertem Polymerisat einer monovinylaromatischen Verbindung beansprucht. Als mehrwertige Phenole werden speziell Resorcin, Brenzkatechin und Phloroglucin angegeben.

Phosphinsäureester von Phenol-Aldehyd/Keton-Kondensaten werden nicht erwähnt. Auch ist die Verwendung von Phosphinsäureester der beanspruchten Art als Flammschutzmittel für Polyamide im Zusammenwirken mit Zinkborat und gegebenenfalls Antidripping-Mitteln wie z.B. Polyfluorethylenpolymerisaten nicht vorbeschrieben.

Gegenstand der Erfindung sind flammgeschützte, nicht tropfende Polyamidformmassen, die in 100 Gew.-Teilen dieser Polyamidformmassen folgende Zusätze enthalten:

a) 3 bis 25 Gew.-%, vorzugsweise 5 bis 22 Gew.-%, teilveresterte Polyphenol-Phosphinsäureester mit 3 bis 75 % freien phenolischen OH-Gruppen (OX = OH), vorzugsweise mindestens 5-40 % an freien phenolischen OH-Gruppen, insbesondere 10-30 % an freien phenolischen OH-Gruppen neben den Phosphinester-OX-Gruppen der Formel (I)

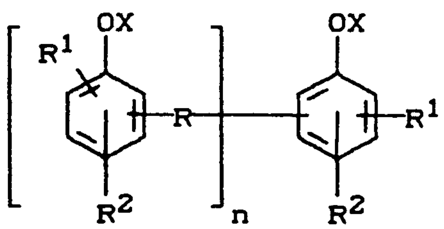

(I)

worin

X = H und der Rest $-P(O)R^3R^4$

n eine ganze Zahl zwischen 1 und 20, bevorzugt zwischen 2 und 10,

R eine Alkylengruppe mit 1 bis 4 Kohlenstoffatomen, bevorzugt Methylen, eine Cycloalkylengruppe mit 5 bis 9 Kohlenstoffatomen oder, wenn n = 1 ist, auch eine direkte Bindung, eine Sulfonyl- oder Carbonylgruppe bzw. Sauerstoff oder Schwefel,

$R^1$ und $R^2$ Wasserstoff, Halogen, Alkylgruppen mit 1 bis 12 Kohlenstoffatomen, bevorzugt Methyl, Ethyl, Propyl- und Butyl(n,i,t)-Gruppen, Cycloalkyl- mit 5 bis 8 Kohlenstoffatomen, Arylgruppen mit 6 bis 10 Kohlenstoffatomen, insbesondere Phenyl, Toluyl oder Xylylgruppen,

$R^3$ und $R^4$ gleich oder verschieden sein können und Alkylgruppen mit je 1 bis 12 C-Atomen, Cycloalkylgruppen mit 5 bis 8 C-Atomen im Ring und gegebenenfalls bis zu 3 Alkylsubstituenten am Cycloalkylring, oder $R^3$ und $R^4$ zusammen einen Alkylenrest bedeuten, der gesättigt oder ungesättigt sein kann und 4 bis 8 C-Atome im Ring und gegebenenfalls 1 bis 3 $C_1$-$C_4$-Alkylsubstituenten, vorzugsweise Methylsubstituenten an diesen Ring zusätzlich enthält,

b) 1 bis 15 Gew.-%, vorzugsweise 3 bis 12 Gew.-%, Zinkborat und/oder Zinkoxid,

c) 0 bis 30 Gew.-%, vorzugsweise 5 bis 25 Gew.-% eines Thermoplasten mit überwiegend aromatischer Hauptkette,

sowie gegebenenfalls weitere Zusatzstoffe aus der Reihe

d) 0 bis 3 Gew.-%, vorzugsweise 0,5 bis 2 Gew.-%, Antidripping-Mittel (z.B. Polytetrafluorethylenpolymerisate),

e) 0 bis 40 Gew.-%, vorzugsweise 10 bis 30 Gew.-%, anorganische Verstärkungsmittel und/oder mineralische Füllstoffe und/oder Pigmente,

f) 0 bis 10 Gew.-%, vorzugsweise 0,5 bis 5 Gew.-% Verarbeitungshilfsmittel und

g) 0 bis 20 Gew.-% übliche Zusatzstoffe für Polyamide wie UV-, Licht- und Thermostabilisatoren, bekannte Schlagzähmodifikatoren und Verträglichkeitsverbesserer.

Die Zusatzmengen in der Polyamidmischung sollen in bevorzugter Ausführungsform dabei insgesamt 65 Gew.-%, vorzugsweise 60 Gew.-%, nicht übersteigen; dabei sollen auch die Teilmengen gegebenenfalls beschränkt sein; so sollen die Gesamtmengen der Flammschutzzusätze (a + b + c) 50 Gew.-%, vorzugsweise 45 Gew.-%, insbesondere 40 Gew.-%, die Gesamtmenge an Zusatzstoffen (d + f + g) 25 Gew.-% der Polyamidmischung nicht übersteigen.

Die erfindungsgemäß eingesetzten Phosphinsäureester (II) sind Alkyl- und Arylphosphinsäureester von Polyphenolen, die an den Phenol-Gruppen nur teilverestert, zu 3-75 %, 5-40 %, besonders bevorzugt zu 10-30 % freie phenolische Gruppen (-OX) = (OH) enthalten, wobei die Polyphenole Kondensationsprodukte von Phenolen mit Aldehyden oder Ketonen sind. Bevorzugt werden dabei Alkyl- und Arylphosphinsäureester von höhermolekularen Phenol-Formaldehyd-Kondensationsprodukten (generell als Novolake bezeichnet).

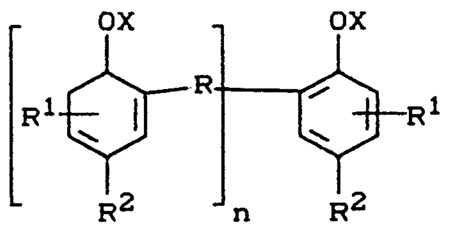

(II)

worin

n, R, $R^1$, $R^2$ die gleiche Bedeutung haben wie in der Formel (I) und

X entweder Wasserstoff oder $-P(O)R^3R^4$ (Phosphinester-Rest) bedeuten, und $R^3$ und $R^4$ gleich oder verschieden sein können und Alkylgruppen mit 1 bis 12 Kohlenstoffatomen, Cycloalkylgruppen mit 5 bis 8 Kohlenstoffatomen oder $R^3$ und $R^4$ zusammen einen Alkylenrest bedeuten, der gesättigt oder ungesättigt sein kann und 4 bis 10 Kohlenstoffatome im Ring oder als Ring und Alkylsubstituenten enthält.

Ganz besonders bevorzugt sind teilweise phosphinsäureveresterte Verbindungen der Formel (III)

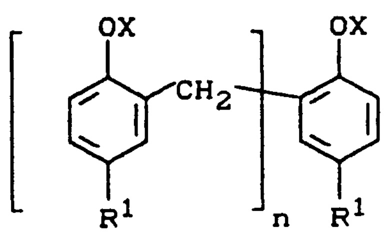

(III)

worin

n vorzugsweise 2 bis 6,

$R^1$ Wasserstoff oder eine Methylgruppe bedeuten und wobei im Rest OX

X Wasserstoff und einen Rest der Formel (IV) bedeutet.

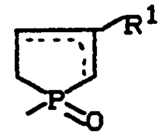

(IV)

Auch hier gelten die bereits genannten Mengenerfordernisse an freien phenolischen OH-Gruppen neben den Phosphinestergruppen.

Polyamide im Sinne der Erfindung sind alle amorphen oder teilkristallinen, überwiegend aliphatisch/cycloaliphatische, thermoplastische Polyamide, die nach dem bekannten Polykondensations- und/oder Polymerisationsprozeß aus überwiegend aliphatischen/cycloaliphatischen Diaminen und Dicarbonsäuren und/oder Lactamen hergestellt werden. Ausgangsmaterialien sind aliphatische oder gemischt aliphatische aromatische Dicarbonsäuren wie Adipinsäure, 2,2,4- und 2,4,4-Trimethyladipinsäure, Azelainsäure, Sebazinsäure, Decandicarbonsäure, Dodecandicarbonsäure, Cyclohexandicarbonsäure, Isophthalsäure und

Terephthalsäure, sowie aliphatische und aromatische Diamine, wie Hexamethylendiamin, 2,2,4- und 2,4,4-Trimethylhexamethylendiamin, Diamino-dicyclohexylmethanisomere, Diamino-dicyclohexylpropanisomere und Isophorondiamin(isomere), Xylylendiamine, Aminocarbonsäuren wie ε-Aminocapronsäure und ω-Aminocarbonsäuren wie ω-Aminoundecansäure und ω-Aminolaurinsäure sowie Salze aus diesen Verbindungen.

Auch Copolyamide aus mehreren der genannten Monomeren können eingesetzt werden.

Bevorzugt sind Polyamid-6, Polyamid-4,6, Polyamid-6,6, Polyamid-6,10, Polyamid-6,12, Polyamid-11, Polyamid-12, Polyamid-6T6, Polyamid-6,66, Polyamid-6,6I, Polyamid-6,6T. Sie besitzen vorzugsweise eine relative Viskosität (gemessen an einer 1 gew.-%igen Lösung in m-Kresol bei 25°C von 2,0 bis 5,0, bevorzugt von 2,5 bis 4,0).

Die Polyamide lassen sich nach bekannten Verfahren herstellen (siehe Kunststoff-Handbuch, Band VI, Seiten 11 bis 198, Carl-Hanser-Verlag, München, 1966).

a) Phosphinsäureester

Die erfindungsgemäß eingesetzten Phosphinsäureester a) sind die Dialkyl-, Diaryl- und Alkylarylphosphinsäureester von Polyphenolen (Novolaken) (in nur teilveresterter Form, die noch mindestens 5 % der Phenol, OH-Gruppen in µm veresterter Form enthalten. Da die Phosphinsäuren nicht direkt in die erfindungsgemäßen Ester umgewandelt werden können, sind ihre reaktiveren Derivate zu ihrer Synthese zu verwenden. Dies sind die Säurechloride, die durch Abspaltung von Chlorwasserstoff, und Phenylester (ebenfalls aus den Säurechloriden), die durch Abspaltung von Phenol (Umesterung) mit den Polyphenolen zu den erfindungsgemäßen Estern umgesetzt werden.

Beispiele für Phosphinsäuren sind Dimethylphosphinsäure, Methylethylphosphinsäure, Diethylphosphinsäure, Methylphenylphosphinsäure, Ethylphenylphosphinsäure, Diphenylphosphinsäure, Di-p-Tolylphosphinsäure und Phenylnaphthylphosphinsäure sowie 1-Hydroxy-1-oxo-phospholen, 1-Hydroxy-1-oxo-3-methyl-phospholen und 1-Hydroxy-1-oxo-3,4-dimethyl-phospholen.

Herstellungsverfahren für Phosphinsäuren und ihre Derivate wie Chloride und Phenylester sind bekannt und in der Literatur zusammengestellt (Methoden der organischen Chemie (Houben-Weyl), Band XII/1, Seiten 217 bis 266, und Band E2, Seiten 123 bis 221).

Die Umsetzung der Phosphinsäurechloride mit Bis- und Polyphenolen erfolgt bei Temperaturen von 180 bis 200°C unter Abspaltung von Chlorwasserstoff recht langsam. Unter Mitverwendung von Katalysatoren wie Magnesiumchlorid gelingt dieses bereits bei niedrigeren Temperaturen und in kürzeren Zeiten. Bei niedrigeren Temperaturen müssen bei der Veresterung von Novolaken (aus Gründen der Biskosität) inerte, hochsiedende Lösungsmittel mitverwendet werden. Üblicherweise werden als Katalysatoren Magnesiumchlorid oder tertiäre Amine eingesetzt.

Bei dem wesentlich schneller ablaufenden Umesterungsverfahren kann als Katalysator ebenfalls Magnesiumchlorid verwendet werden. Andere Magnesium- oder Zinksalze sind ebenfalls einsetzbar. Die Temperaturen liegen wieder bei 200°C.

Novolake werden nach bekannten Verfahren hergestellt, Methoden der organischen Chemie (Houben-Weyl), Band XIV/2, Seiten 193 bis 292, und Ullmanns Encyclopädie der technischen Chemie, 4. Auflage, Band 18, Seiten 245 bis 257).

Geeignete Novolake sind Kondensationsprodukte aus Formaldehyd und Phenolen der allgemeinen Formel (I). Charakteristische Beispiele für Phenole sind, ohne damit eine Einschränkung zu treffen, Phenol, o-Kresol, m-Kresol, p-Kresol, 2,5-Dimethyl-, 3,5-Dimethyl-, 2,3,5-Trimethyl-, 3,4,5-Trimethyl-, p-t-Butyl-, p-n-Octyl-, p-Stearyl-, p-Phenyl-, p-(2-Phenylethyl)-, o-Isopropyl-, p-Isopropyl-, m-Isopropylphenol sowie zahlreiche andere Phenole.

Bevorzugt eingesetzt werden Phenol, o-Kresol, m-Kresol, p-Kresol, p-t-Butylphenol und o-t-Butylphenol und p-Octylphenol.

Es können aber auch Gemische aus diesen Phenolen eingesetzt werden.

Bevorzugt eingesetzte Novolake sind demnach beispielsweise
Phenol/Formaldehyd-Novolak,
o-Kresol/Formaldehyd-Novolak,
m-Kresol/Formaldehyd-Novolak,
p-Kresol/Formaldehyd-Novolak,
t-Butylphenol/Formaldehyd-Novolak,
p-Octylphenol/Formaldehyd-Novolak.

Besonders bevorzugt wird der p-Kresol/Formaldehyd-Novolak und der Phenol/Formaldehyd-Novolak.

b) Zinkborate (Hydrate)

Zinkborate (Hydrate) können Produkte unterschiedlicher Zusammensetzung sein (siehe Ullmann's Encyclopedia of Industrial Chemistry, 5. Edition, Volume A4, Page 276). Als Flammschutzmittel für Polyamidformmassen ist besonders $2ZnO*3B_2O_3*5H_2O$ geeignet.

Zinkoxide können Produkte mit unterschiedlichen Korngrößen sein. Als Additiv für die Polyamidformmassen ist besonders "Zinkoxid-Aktiv" der Fa. Bayer AG geeignet.

c) Aromatische Thermoplaste

Als erfindungsgemäße Thermoplasten mit überwiegend aromatischer Hauptkette und mit hoher Wärmeformbeständigkeit (Vicat B $\geqq$ 180 °C) werden u.a. Polysulfone, Polyethersulfone, Polyketone, Polyetherketone, Polyphenylenoxide und Polyarylensulfide eingesetzt. Diese Thermoplasten werden nach literaturbekannten Verfahren hergestellt. Bevorzugt sind Polyphenylensulfid und Polyethersulfone auf Basis Bisphenol A und 4,4'-dichlordiphenylsulfon.

d) Antidripping-Mittel

Die erfindungsgemäß geeigneten Polyfluorethylenpolymerisate B1) sind Polymere mit Fluorgehalten von 65 bis 76 Gew.-%, vorzugsweise 70 bis 76 Gew.-%. Beispiele sind Polytetrafluorethylen, Tetrafluorethylen-Hexafluorpropylen-Copolymere, Tetrafluorethylen-Difluorethylen-Copolymere oder Tetrafluorethylencopolymerisate mit geringen Mengen fluorfreier, copolymerisierbarer, ethylenisch ungesättigter Monomerer. Die Polymerisate sind bekannt. Sie können in feinteiliger Form, gewöhnlich als Pulver verwendet werden. Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxydisulfat, bei Drücken von 7 bis 71 $kg/cm^2$ und bei Temperaturen von 0 bis 200 °C, vorzugsweise bei Temperaturen von 20 bis 100 °C (nähere Einzelheiten siehe beispielsweise US-Patent 2 393 967).

Die erfindungsgemäß geeigneten Polyfluorethylenpolymerisate sollen vorzugsweise Gewichtsmittelmolekulargewichte $M_w$ zwischen $10^5$ und $10^6$ haben.

Die Polyfluorethylenpolymerisate werden bevorzugt in nicht gesinterter Form zugesetzt.

Durch den Zusatz von Polyluorethylenpolymerisaten wird insbesondere das Abtropfen der Formmassenschmelze während des Brandvorganges reduziert oder ganz verhindert.

e) Verstärkungsmittel

Erfindungsgemäß gegebenenfalls einsetzbare anorganische Verstärkungsmittel e) umfassen alle bekannten für die Verstärkung von Polyamiden bekannten Mittel. Zum Beispiel werden genannt: Glasfasern, Glaskugeln und/oder mineralische Füllstoffe, wie in Katz und Milewski, "Handbook of Fillers and Reinforcements for Plastics", Nostrand-Verlag, 1978, beschrieben.

Bevorzugt werden als anorganische Verstärkungsmittel Glasfasern eingesetzt. Die eingesetzten Glasfasern besitzen im allgemeinen einen Durchmesser von etwa 6 bis 15 $\mu$m, bevorzugt 8 bis 13 $\mu$m, und ein Längen- zu Dickenverhältnis von größer als 45, bevorzugt 50 bis 200.

Als weitere Füll- und Verstärkungsstoffe kommen Mikroglaskugeln, Kohlefasern, Kreide, Quarz wie beispielsweise Novoculit und Silikate wie Asbest, Feldspat, Glimmer, Talkum, Wollastonit sowie Kaolin in kalzinierter und nicht kalzinierter Form sowie als weitere Füllstoffe und Pigmente Erdalkalimetallcarbonate, Erdalkalimetalloxide, Erdalkalimetallsulfate, Titandioxid und/oder Zinksulfid in Frage. Die eingesetzten mineralischen Füllstoffe besitzen mittlere Teilchendurchmesser von weniger als 20 $\mu$m, bevorzugt weniger als 10 $\mu$m, insbesondere 2 bis 8 $\mu$m. Sie können in geeigneter Weise oberflächenmodifiziert sein, z.B. mit Aminoalkylsilan behandelt sein.

f) Verarbeitungshilfsmittel

Als Verarbeitungshilfsmittel f) können den erfindungsgemäßen Formmassen Entformungsmittel, Stabilisatoren, Fließhilfsmittel und Weichmacher zugesetzt werden.

Als Entformungsmittel können Esterwachse, z.B. Montanwachs, Amidwachs wie Rhenax® und/oder Oligoethylene verwendet werden. Als Weichmacher kommen z.B. aliphatische oligomere Polyester in Frage (siehe EP 29 931 und DE 2 706 128).

g) Schlagzähmodifikatoren

Als Schlagzähmodifikatoren sind insbesondere Kautschuke wie Butadien-Acrylnitril-Copolymerisate, Butadien-Styrol-Copolymerisate, Butadien-Styrol-Blockcopolymerisate, Alkylacrylatkautschuke, EP- bzw. EPDM-Kautschuksysteme sowie Siliconkautschuke geeignet. Vorzugsweise werden als Kautschukkomponente Pfropfkautschuke eingesetzt, bei denen Vinylmono- oder Copolymerisate auf einem der vorgenannten Kautschuksysteme aufgepfropft sind, wobei die Glastemperatur der Pfropfgrundlage unterhalb -10 ° C liegen sollte. Bevorzugt sind Pfropfkautschuke vom Typ MBS- bzw. MABS- bzw. EP- bzw. EPDM- oder EBDM-Kautschuke, (E = Ethylen, B = Butylen, P = Propylen), auf die in kleinen Anteilen Maleinsäureanhydrid bzw. Styrol-Maleinsäureanhydrid aufgepfropft wurden. Weitere Beispiele sind in der US 4 174 358, US 3 845 163, US 3 668 274 aufgeführt.

Die Herstellung der Mischungen aus thermoplastischen Polyamiden, Phosphinsäureestern von Polyphenolen, Polyfluorethylenpolymerisaten und/oder Aramiden, Thermoplasten mit überwiegend aromatischer Hauptkette und hoher Wärmeformbeständigkeit (Vicat B ≧ 180 ° C), anorganischen Verstärkungsmitteln, Füllstoffen und Pigmenten sowie Verarbeitungshilfsmitteln kann in den üblichen Mischaggregaten, wie Walzen, Knetern, Ein- und Mehrwellenextrudern, erfolgen. Die Verarbeitungshilfsmittel können als Konzentrate in thermoplstischem Polyamid in Granulatform oder als Pulvermischung bei der Compoundierung der Komponenten zudosiert werden. Die Temperatur bei der Herstellung der Mischungen und der Formkörper aus ihnen soll üblicherweise bei 260 bis 285 ° C liegen.

Das Herstellungsverfahren kann sowohl diskontinuierlich als auch kontinuierlich unter Bedingungen durchgeführt werden, bei denen eine Oxidation weitgehend ausgeschlossen ist, d.h. vorzugsweise unter Schutzgasatmosphäre. Als Schutzgas eignen sich z.B. Stickstoff, Kohlendioxid und/oder Argon.

Die flammfest ausgerüsteten Polyamid-Formkörper sind besonders für den Einsatz auf dem Elektro- und Automobilsektor geeignet und finden beispielsweise zur Herstellung von Gehäusen und Abdeckungen für technische Geräte wie Elektrohaushaltsgeräte und für Automobilteile Verwendung. Sie zeichnen sich durch eine besondere Migrationsstabilität der Zusätze aus und vermindern auch die Wasseraufnahme von Polyamiden wie Polycaprolactam und ergeben Formkörper mit hohem Modul und Steifigkeit.

## Beispiele

A. Eingesetzte Komponenten

I. Polyamid 66 mit einer relativen Viskosität von 3,0, gemessen an einer 1 %igen Lösung in m-Kresol bei 25 ° C, als Granulat,
II. Polyamid 6 mit einer relativen Viskosität von 3,0, gemessen an einer 1 %igen Lösung in m-Kresol bei 25 ° C, als Granulat,
III. Umsetzungsprodukt (Ester) aus einem Novolak aus p-Kresol und Formaldehyd, Ausgangs-OH-Zahl 468, Zahl der Kresol-Kerne ca. 5, und 1-Phenoxy-1-oxo-3-methyl-phospholen und einer resultierenden OH-Zahl von 102,
IV. Umsetzungsprodukt (Ester) aus einem Novolak aus Phenol und Formaldehyd, Ausgangs-OH-Zahl 512, Zahl der Phenol-Kerne ca. 5, und 1-Phenoxy-1-oxo-3-methyl-phospholen und einer resultierenden OH-Zahl von 115,
V. Umsetzungsprodukt (Ester) aus einem Novolak aus p-Kresol und Formaldehyd, Ausgangs-OH-Zahl 468, Zahl der Kresol-Kerne ca. 5, und 1-Phenoxy-1-oxo-3-methyl-phospholen und einer resultierenden OH-Zahl von 52,
VI. Umsetzungsprodukt (Ester) aus einem Novolak aus Phenol und Formaldehyd, Ausgangs-OH-Zahl 512, Zahl der Phenol-Kerne ca. 5, und 1-Phenoxy-1-oxo-3-methyl-phospholen und einer resultierenden OH-Zahl von 56,
VII. Zinkborat (Hydrat), $2\ ZnO * B_2O_3 ^+ 5\ H_2O$, Firebreak® ZB der U.S. Borax & Chemical Corp. USA
VIII. Zinkoxid-Aktiv® der Fa. Bayer AG
IX. Polyphenylensulfid
X. Polyethersulfon aus Bisphenol A und 4,4'-Dichlordiphenylsulfon
XI. Polytetrafluorethylen-Pulver, Hostaflon® TF 2027, der Firma Hoechst AG,
XII. Kurzglasfaser, Typ CS 7919 der Bayer AG.

B. Allgemeine Vorschrift zur Herstellung der Phosphinsäureester

1 OH-Äquivalent Novolak wird mit der entsprechenden Mol-Menge 1-Phenoxy-1-oxo-3-methyl-phospholen und 0,5 Mol-% wasserfreiem Zinkacetat in einem 500 ml-Dreihalskolben mit Thermometer, Rührer und Destillationsaufsatz eingewogen. Die Apparatur wird mit Stickstoff gespült und bei 300 hPa auf 200 ° C unter

Rühren aufgeheizt. Nach 30 Minuten wird der Druck in der Apparatur innerhalb von 2 Stunden kontinuierlich bis auf 3 hPa reduziert, wobei Phenol abdestilliert wird. Anschließend wird die Innentemperatur auf 250 °C erhöht und das Reaktionsgemisch 1 Stunde ausdestilliert. Der Kolbeninhalt wird ausgegossen und erstarrt beim Abkühlen glasartig. Eine weitere Aufarbeitung erübrigt sich.

C. Herstellung, Verarbeitung und Prüfung der Formmassen

Die eingesetzten Komponenten werden in den in Tabelle 1 angegebenen Mengen (Angaben in Gew.-%) in einem Zweiwellenextruder geschmolzen, vermischt, zu Strängen extrudiert und granuliert. Die Herstellung der Formmassen kann beispielsweise mit einem Extruder, ZSK 32 der Firma Werner & Pfleiderer, bei Massetemperaturen von 275 bis 300 °C und einer Schneckendrehzahl von 100 bis 150 U/min. sowie einem Durchsatz von 8 bis 12 kg/h erfolgen.

Nach ausreichender Trocknung (z.B. bis 4 Stunden bei 120 °C) werden die Formmassen auf üblichen Spritzgießmaschinen bei Massetemperaturen von 260 bis 290 °C, einer Formentemperatur von etwa 80 °C und einer Schmelzestandzeit von nicht mehr als 8 Minuten zu Formkörpern bzw. Normprüfstäben verspritzt und dem Brandtest nach Vorschrift Underwriter Laboratories (UL 94) unterzogen. Tabelle 2 zeigt die erhaltenen Prüfdaten.

**Tabelle 1:** Zusammensetzung der Polyamidformmassen in Gew.-%

Komponenten

| Beispiel | I | II | III | IV | V | VI | VII | VIII | IX | X | XI | XII |
|---|---|---|---|---|---|---|---|---|---|---|---|---|
| 1 | 64,5 | 0 | 20 | 0 | 0 | 0 | 8 | 0 | 15 | 0 | 0,5 | 0 |
| 2 | 0 | 64,5 | 20 | 0 | 0 | 0 | 8 | 0 | 15 | 0 | 0,5 | 0 |
| 3 | 64,5 | 0 | 0 | 20 | 0 | 0 | 8 | 0 | 15 | 0 | 0,5 | 0 |
| 4 | 64,5 | 0 | 0 | 0 | 20 | 0 | 8 | 0 | 15 | 0 | 0,5 | 0 |
| 5 | 64,5 | 0 | 20 | 0 | 0 | 20 | 8 | 0 | 15 | 0 | 0,5 | 0 |
| 6 | 64,5 | 0 | 20 | 0 | 0 | 0 | 6 | 2 | 15 | 0 | 0,5 | 0 |
| 7 | 43,0 | 21,5 | 20 | 0 | 0 | 0 | 8 | 0 | 15 | 0 | 0,5 | 0 |
| 8 | 21,5 | 43,0 | 20 | 0 | 0 | 0 | 8 | 0 | 15 | 0 | 0,5 | 0 |
| 9 | 64,5 | 0 | 20 | 0 | 0 | 0 | 8 | 0 | 0 | 15 | 0,5 | 0 |
| 10 | 57,5 | 0 | 17 | 0 | 0 | 0 | 8 | 0 | 15 | - | 0 | 10 |
| 11 | 55,5 | 0 | 17 | 0 | 0 | 0 | 8 | 0 | 12 | 0 | 0 | 15 |

Tabelle 2

| Ergebnisse der Brandprüfung nach UL 94 | | |
|---|---|---|
| Beispiel | Topfverhalten | Brandverhalten bei 1,6 mm Wandstärke |
| 1 | tropft nicht | V - O |
| 2 | tropft nicht | V - O |
| 3 | tropft nicht | V - O |
| 4 | tropft nicht | V - O |
| 5 | tropft nicht | V - O |
| 6 | tropft nicht | V - O |
| 7 | tropft nicht | V - O |
| 8 | tropft nicht | V - O |
| 9 | tropft nicht | V - O |
| 10 | tropft nicht | V - O |
| 11 | tropft nicht | V - O |

## Patentansprüche

**1.** Flammgeschützte, nicht tropfende Polyamidformmassen, die in 100 Gew.-Teilen dieser Polyamidformmassen folgende Zusätze enthalten:

a) 3 bis 25 Gew.-% teilveresterte Polyphenol-Phosphinsäureester mit 3 bis 75 % freien phenolischen OH-Gruppen (OX = OH) der Formel (I)

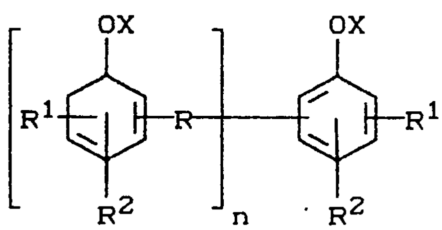

worin

| | |
|---|---|
| n | eine ganze Zahl zwischen 1 und 20, bevorzugt zwischen 2 und 10, |
| R | eine Alkylengruppe mit 1 bis 4 Kohlenstoffatomen, eine Cycloalkylengruppe mit 5 bis 9 Kohlenstoffatomen oder, wenn n = 1 ist, auch eine direkte Bindung, eine Sulfonyl-oder Carbonylgruppe bzw. Sauerstoff oder Schwefel, |
| $R^1$ und $R^2$ | Wasserstoff, Halogen, Alkylgruppen mit 1 bis 12 Kohlenstoffatomen, Cycloalkyl- mit 5 bis 8 Kohlenstoffatomen, Arylgruppen mit 6 bis 10 Kohlenstoffatomen, |
| X | entweder Wasserstoff oder $-P(O)R^3R^4$, aber im Mittel mindestens einmal eine $-P(O)R^3R^4$-Gruppe, |
| $R^3$ und $R^4$ | gleich oder verschieden sein können und Alkylgruppen mit 1 bis 4 Kohlenstoffatomen, Cycloalkylgruppen mit 5 bis 8 C-Atomen im Ring und gegebenenfalls bis zu 3 Alkylgruppen am Cycloalkylring und/oder Arylgruppen mit 6 bis 10 Kohlenstoffatomen sind, wobei $R^3$ und $R^4$ zusammen auch einen Alkylenrest bedeuten, der gesättigt oder ungesättigt (C = C-Doppelbindung) sein kann und der gebildete Ring gegebenenfalls $C_1$-$C_4$-Alkylsubstituenten, an diesen Ring zusätzlich enthält, |

b) 1 bis 15 Gew.-%, vorzugsweise 3 bis 12 Gew.-%, Zinkborat und/oder Zinkoxid,

c) 0 bis 30 Gew.-%, vorzugsweise 5 bis 25 Gew.-% eines Thermoplasten mit überwiegend aromatischer Hauptkette,

sowie gegebenenfalls weitere Zusatzstoffe aus der Reihe

d) 0 bis 3 Gew.-%, vorzugsweise 0,5 bis 2 Gew.-%, Antidripping-Mittel (z.B. Polytetrafluorethylenpolymerisate),

e) 0 bis 40 Gew.-%, vorzugsweise 10 bis 30 Gew.-%, anorganische Verstärkungsmittel und/oder mineralische Füllstoffe und/oder Pigmente,

f) 0 bis 10 Gew.-%, vorzugsweise 0,5 bis 5 Gew.-% Verarbeitungshilfsmittel und

g) 0 bis 20 Gew.-% übliche Zusatzmittel für Polyamide wie UV-, Licht- und Thermostabilisatoren, bekannte Schlagzähmodifikatoren und Verträglichkeitsverbesserer.

**2.** Polyamid-Formmassen nach Anspruch 1, dadurch gekennzeichnet, daß die Phosphinsäureester (I) 5 bis 40, vorzugsweise 10 bis 30 % freie phenolische OH-Gruppen neben den Phosphinsäureestergruppen in den Polyphenolen enthalten.

**3.** Polyamid-Formmassen gemäß Ansprüchen 1 und 2, dadurch gekennzeichnet, daß Polyamid 6, Polyamid 6,6 oder Polyamide aus $\epsilon$-Caprolactam, Hexamethylendiamin, Adipinsäure, eingesetzt werden.

**4.** Polyamid-Formmassen nach den Ansprüchen 1 bis 3, dadurch gekennzeichnet, daß als Dicarbonsäuren Isophthalsäure und/oder Terephthalsäure zusammen mit oder ohne Adipinsäure zur Herstellung der Polyamide eingesetzt werden.

**5.** Formmassen nach den Ansprüchen 1 bis 5, dadurch gekennzeichnet, daß die teilveresterten Phosphinsäureester von Polyphenolen (Komponente A) in Mengen von 5 bis 22 Gew.-%, vorzugsweise in Mengen von 5 bis 10 Gew.-% eingesetzt werden.

**6.** Formmassen gemäß den Ansprüchen 1 bis 5, dadurch gekennzeichnet, daß als Thermoplast mit überwiegend aromatischer Hauptkette Polyarylensulfide, insbesondere Polyphenylensulfid oder Polyethersulfone aus Bisphenol A und 4,4'-Dichlordiphenylsulfon eingesetzt werden.

**7.** Polyamidformmassen nach Ansprüchen 1 bis 6, dadurch gekennzeichnet, daß teilveresterte Polyphenol-phosphinsäureester (II) von Polyphenolen als Kondensationsprodukte von Phenolen mit Aldehyden oder Ketonen,

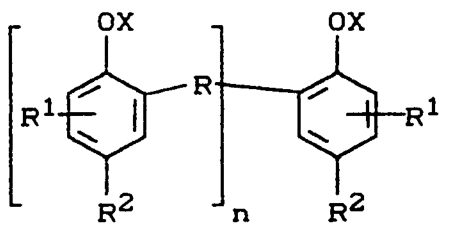

(II)

worin

n, R, $R^1$, $R^2$ und X die gleiche Bedeutung haben wie in Anspruch 1,

eingesetzt werden.

**8.** Polyamidformmassen nach Ansprüchen 1 bis 7, dadurch gekennzeichnet, daß als teilveresterte Polyphenolphosphinsäureester solche auf Novolak-Basis, entsprechend der Formel III

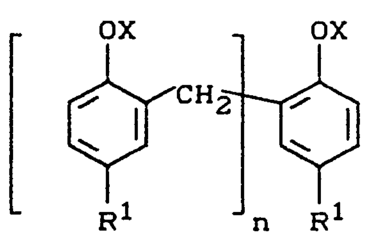

(III)

wobei

n und $R^1$ die genannte Bedeutung haben, vorzugsweise n = 2-6; $R^1$ vorzugsweise Methyl ist und X H und einen Rest der Formel (IV)

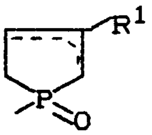

darstellt,
eingesetzt werden.

9. Verfahren zur Herstellung von Polyamidformmassen nach den Ansprüchen 1 bis 8, dadurch gekennzeichnet, daß man die Komponenten in bekannter Weise vermischt und bei Temperaturen von 200 bis 330 °C in üblichen Aggregaten schmelzcompoundiert oder schmelzextrudiert oder die Komponenten in verschiedenen Einzelschritten zum fertigen Compound schmelzcompoundiert bzw. schmelzextrudiert.

Europäisches Patentamt

# EUROPÄISCHER RECHERCHENBERICHT

Nummer der Anmeldung

EP 92 10 0418

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X | EP-A-0 413 167 (BAYER AG)<br>* Seite 7, Zeile 53 - Zeile 58; Ansprüche; Beispiel 1 * | 1-9 | C08K13/02<br>C08L77/00<br>//(C08K13/02, 5:5313,3:22)<br>(C08K13/02, 5:5313,3:38) |
| P,X | EP-A-0 416 259 (BAYER AG)<br>* Seite 7, Zeile 50 - Zeile 54; Ansprüche; Beispiel 1 * | 1-9 | |
| A | EP-A-0 332 965 (BAYER AG)<br>* Seite 4, Zeile 51 - Zeile 56; Ansprüche * | 1 | |
| | | | RECHERCHIERTE SACHGEBIETE (Int. Cl.5) |
| | | | C08K<br>C08L |

Der vorliegende Recherchenbericht wurde für alle Patentansprüche erstellt

| Recherchenort | Abschlußdatum der Recherche | Prüfer |
|---|---|---|
| DEN HAAG | 11 MAI 1992 | DE LOS ARCOS E. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)